# EUROPEAN PATENT APPLICATION

(11) **EP 2 444 468 A1**
(43) Date of publication of application: **25.04.2012**
(21) Application number: 10789030.3
(22) Date of filing: 15.06.2010
(51) Int. Cl.: C09K 5/02, C01B 31/02, C04B 35/52, C04B 41/81

(54) **COMPOSITE MATERIAL FOR STORING HEAT ENERGY AT HIGH TEMPERATURES**

(30) Priority: 16.06.2009 ES 200901423
(71) Applicant: Abengoa Solar New Technologies, S.A., 41018 Sevilla (ES)
(72) Inventor: PALOMO DEL BARRIO, Elena, F-33405 - Talence Cedex (FR); BEN KHEMIS, Sabri, F-33405 - Talence Cedex (FR); MOURAND, David, F-33405 - Talence Cedex (FR); NOEL, Frédéric, F-33405 - Talence Cedex (FR); HO-KON-TIAT, Vanessa, F-33405 - Talence Cedex (FR); DAUVERGE, Jean-Luc, F-33405 - Talence Cedex (FR); ANGUY, Yannick, F-33405 - Talence Cedex (FR); PRIETO RIOS, Cristina, E-41018 - Sevilla (ES); JOVE LLOVERA, Aleix, E-41018 - Sevilla (ES)
(74) Representative: Garcia-Cabrerizo y del Santo, Pedro Maria
(86) International application number: PCT/ES2010/000261
(87) International publication number: WO 2010/146197

(57) **Abstract**

Composite material for storing heat energy at high temperatures (225°C to 488°C) formed by a porous carbon structure at least partially filled with LiOH/KOH, wherein a large amount of heat energy may be stored or released very quickly. The carbon structure is **characterised by** a high volumetric thermal conductivity, a low density, a highly interconnected porosity and a relatively high modulus of elasticity. The significant properties of LiOH/KOH mixtures are: a large amount of energy involved in full melting/crystallisation, a fairly low relative volume expansion upon melting and fairly low subcooling. The main advantages of the resulting composites are a very high energy density, a relatively low volume expansion, highly enhanced heat transfer, thermoadaptability, stability and insignificant hysteresis.

## Description

### TECHNICAL FIELD OF THE INVENTION

The present invention relates to new phase-change materials for storing heat energy at high temperatures (>200°C). They are the result of filling a porous carbon structure with a phase-change material with a high energy density. The function of the phase-change material is to store or release heat energy in a selected temperature interval, whereas the carbon is used to enhance heat transfer.

### BACKGROUND OF THE INVENTION

Currently, there are many applications that require storing a large amount of heat at high temperatures. In the industrial sector, the recovery, storage and re-use of residual heat could play a significant role for an efficient, economical use of energy.

In the generation of energy based on conventional conversion techniques (i.e. gas or oil power plants), the storage of heat could be a useful way to improve the efficacy and recovery thereof, as well as to reduce the nominal energy required to adjust to load peaks.

As regards renewable energies, due to the increase in the amount of electricity generated from these sources, significant network stability problems have started to arise, since they depend on the availability of the resource; for example, the existing solar power plants stop operating at night; for this reason, the integration of heat energy storage would prevent network stability problems and extend the energy supply period, which would contribute to a satisfactory commercialisation of these technologies.

On the other hand, in the case of autonomous solar thermal plants in remote or isolated electric parks, the storage of energy is a key element for maximising the capacity factor and ensuring availability. Heat storage at high temperatures could also be used to increase the efficacy in co-generation.

Another field of application of the new phase-change materials proposed could be thermal protection for high-energy electronic devices. In the aerospace field, they could be used as a heat sink to prevent the overheating of satellites during cyclic orbits, as well as to prevent overheating of the front edges of space vehicles during re-entry. Other potential sectors wherein significant thermal protection is required would be brake systems in the aerospace industry and tempering temperature peaks in exothermal reactions in the chemical industry.

Despite the interest, there are very few, or no, commercial systems for storing heat energy at high temperatures. The main reason is the still high investment cost of the existing technologies, which leads to non-economical systems.

In storage systems, an essential aspect to achieve a significant cost reduction is the development of low-cost materials that are stable in the long term and meet the energy requirements for storage in plants, and which prevent overdimensioning of the storage unit.

The existing embodiments are typically based on sensible heat storage systems using liquids (i.e. oils, molten salts) or solids (i.e. metals, ceramics, stones, concrete) as a means of storage. Liquids predominate in applications within the interval between 150°C and 400°C, and solids predominate in the temperature interval beyond 500°C/600°C. For these solids, the energy densities range between 1500-3000 kJ/(m³·K) and the investment costs range between 30 €/kWh, for concrete, and 400 €/kWh, for ceramic materials.

In order to reduce investment costs, a key point in these systems is obtaining a compact container, since a significant part of the storage costs is generally due to the heat exchangers, the receptacles and the thermal insulation.

Heat storage is based on phase-change materials (latent heat technology) that show a high potential for the development of efficient, economical storage systems, especially for applications that use fluids which undergo a constant-temperature process, such as wet steam during condensation or evaporation. The main advantage of phase-change materials is their capacity to store/release a large amount of heat in a narrow temperature interval during phase changes.

Amongst them, salts have been identified as potential candidates for the development of efficient, economical latent heat storage systems. The latent energy or heat involved in the melting/crystallisation of salts is normally within the interval between 100-1000 kJ/kg (0.2-2 GJ/m³); these values generally increase with the melting temperature of the salts.

As compared to sensible heat technologies, the phase-change heat storage technology using salts causes system volumes to significantly decrease (normally more than 10-fold), which prevents overdimensioning of the heat exchanger. However, the low thermal conductivities of salts (< 1 W/m/K) are a limiting factor in meeting the energy requirements of the intended industrial applications.

At low temperatures, different methods have been proposed and assayed to increase the thermal conductivity of phase-change materials, primarily paraffin waxes. The use of metal charges, such as aluminium or copper additives, metal foams or fins, are the oldest solutions. It was found that, when these additives were used, the charging and discharging times of the storage system significantly decreased. However, these metal charges added a significant weight and cost to the storage systems, furthermore adding the danger of the appearance of corrosion.

Paraffin waxes supported within a porous structure of an activated silica or carbon catalyst are interesting alternative routes to metal charges due to their low density.

Some authors have proposed conductivity enhancement techniques based on graphite additives and graphite foams saturated with or in phase-change materials (PCMs).

Patents W098/04644, FR2715719A1, US7316262B1 and US6399149B1 also relate to porous structures (metal or carbon foams, carbon fibres) filled with phase-change materials (PCMs) that melt at low temperatures.

As regards research on heat energy storage systems for high temperatures, it is very recent and is primarily resolved on the basis of salts the conductivity whereof is enhanced using graphite. The main reasons to choose graphite are its great resistance to corrosion and chemical attack, its very high thermal conductivity and its low cost.

Within the framework of the DISTOR (Energy Storage for Direct Steam Solar Power Plants) project, performed in the Solar Platform of Almeria, the viability of conductivity enhancement techniques based on systems without graphite has been tested using KNO₃/NaNO₃ (50% in moles) for applications at 225°C. Two main preparation pathways have been researched: dispersion of the graphite particles in a molten salt and cold press micro-encapsulation (uniaxial and isostatic) of a mixture of powder from expanded natural graphite and salts.

Similar developments have been performed using salts such as KNO₃/NaNO₃, LiNO₃, NaNO₃/NaCl, KNO₃, LiCO₃/Na₂CO₃ and LiBr, which melt at 225, 252, 295, 337, 493, and 546°C, respectively.

United States patent US6399149B1 relates to porous carbon structures filled with phase-change materials and coated to form a product that acts as a heat sink. However, for application at high temperatures, only phase-change materials with a solid-liquid transition below 1800°C or 1200°C, but which remain in the liquid state up to temperatures as high as 1800°C or 1200°C, have been considered.

Although the efficacy of carbon in enhancing the conductivity of salts has been proven, various problems and limitations have been identified for carbon/salt composites to become a real option for storing heat energy:
■ The main disadvantage is generally related to the volume expansion of salts when they melt and are subsequently subjected to mechanical stress. Searching for salts with a fairly low relative volume expansion, as well as carbon structures that allow for the local management of the volume expansion of salts, is an important aspect for the improvement of carbon/salts materials.
■ The salts that have already been researched undergo melting at constant temperature (pure salts, eutectic mixtures). Consequently, the use thereof is limited to applications with operational fluids that also undergo a constant-temperature process, such as wet steam during condensation or evaporation. If they are to be used in applications that require several temperatures, cascades of appropriate salts must be implemented in order to meet the process requirements in terms of the inlet/outlet temperatures of the operational fluid. This could be viable, albeit at the expense of the simplicity of the storage systems. In this regard, searching for mixtures of salts that undergo melting in an appropriate temperature interval could be an interesting alternative, since there would be no segregation of the chemical components of the salt.
■ The energy density (latent heat) of the already-researched salts ranges between 100 and 360 kJ/kg. Searching for a salt that provides a significantly higher energy density will be a way to increase the compactness of the storage systems and, consequently, reduce investment costs.
■ Most inorganic phase-change materials present subcooling. This is a random phenomenon in nature that could lead to significant differences between the melting and crystallisation temperatures. In heat energy storage applications, subcooling is generally a disadvantage, because it entails using different operating temperatures for charging and discharging.

The carbon/salt composites of this invention overcome said limitations and become a promising option for the economical storage of heat energy in the temperature interval between 225°C and 477°C. As will be analysed below, the main advantages of these composites are a very high energy density, a fairly low relative volume expansion, highly enhanced heat transfer, thermoadaptability, stability and insignificant hysteresis.

### DESCRIPTION OF THE INVENTION

Thus, an objective of the present invention is the production of composites with a high thermal conductivity made of a porous carbon structure filled with a salt wherein a large amount of heat energy may be stored or released very quickly.

As heat is added to the surface of the composite from a heat source such as a computer chip, an operational fluid or radiation such as sunlight, that energy is quickly and uniformly transmitted through the carbon structure and, thereafter, to the salt. Due to the latent heat of melting, the energy absorbed in the salt is several orders of magnitude greater than that which a non-phase-change material would absorb. Conversely, the composite may be used to release energy quickly when it is placed in contact with a cooler object or operational fluid.

Another objective of the present invention is to provide an easy way to adjust the melting/crystallisation temperature of the composite that is to store the energy, such that a broad temperature interval of application may be covered with the same chemical components.

The present invention is also intended to provide composites with insignificant hysteresis, which allow for local management of the volume expansion of the salt upon melting.

These objectives are achieved by an adequate selection of both the salt and the porous carbon structure.

The selected salt that meets the expected requirements is the binary system LiOH/KOH.

This composite material presents very beneficial characteristics; namely:
■ Thermoadaptability. It is achieved by changing the molar content of LiOH in the LiOH/KOH mixture and makes it possible to cover a broad interval of applications. For example, a mixture with 46.5% by weight of LiOH could be used to store energy at 314°C, whereas mixtures with 78.92% by weight of LiOH will be preferred to store energy in the temperature interval between 314°C-450°C.
■ Very high energy density. The energy involved in the full solid-liquid transformations of LiOH/KOH is very high, and may reach 1500 kJ/kg. For example, the latent heat of a mixture with 46.05% by weight of LiOH is 535 kJ/kg, whereas the enthalpy change involved in the full melting of a mixture with 78.92% by weight of LiOH is 1100 kJ/kg. This allows for an increase in the compactness of the storage systems and, consequently, a reduction in investment costs.
■ Low volume expansion. The maximum relative volume expansion of LiOH/KOH mixtures is less than 9%.
■ Highly enhanced heat transfer. Due to the high overall (volumetric) thermal conductivity of the selected carbon structures, the time required for charging/discharging of the storage system may be significantly reduced using a very low carbon content in the carbon/salt composites. This increase in the thermal conductivity of the composites is a very effective way to reduce the heat transfer area (operational fluid/storage medium) and, consequently, entails a significant reduction in investment costs.
■ Insignificant hysteresis. The subcooling of LiOH/KOH mixtures is quite low, i.e. there are no significant differences between the melting and crystallisation temperatures observed. Consequently, the resulting storage systems do not require different operating conditions for charging and discharging.
■ Stability. The association "carbon structures - LiOH/KOH" seems to be stable (with no degradation of the energy storage properties) through time.

As regards the carbon structures wherein the salt is introduced, porous structures such as foams (whether graphite foams, vitreous carbon foams, etc.), honeycombs, blocks of fibres (such as carbon fibres), nanotubes, etc. may be used in order to enhance the heat transfer of the LiOH/KOH mixtures. The main properties required for these structures in relation to the development of carbon/salt composites are:
■ A high overall (volumetric) thermal conductivity. For example, graphite foams and blocks of carbon fibres may show an overall thermal conductivity that ranges between 50 and 180 W/m/K (comparable to that of metals).
■ A low density, which makes them a light solution for the enhancement of the thermal conductivity of salts. The density of graphite foams normally ranges between 200 and 600 kg/m³.
■ A highly interconnected porosity, to allow for easy filling of the pores. For example, over 96% of the pores of graphite foams are interconnected or they have open porosity. The pore diameters range between 60 and 350 µm (mean values), depending on the apparent density of the foam (600 to 200 kg/m³)_{.}
■ A relatively high modulus of elasticity and a resistance to compression that ensures the dimensional stability of the structure when it is infiltrated with a salt and subjected to mechanical stress which results in melting of the salt (volume expansion). The blocks of fibres mentioned above as a type of carbon structure allow for better control of the volumetric modulus of elasticity.

### DESCRIPTION OF THE DRAWINGS

In order to complete the description being made and contribute to a better understanding of the characteristics of the invention, a set of drawings is attached, where the following has been represented, for illustrative, non-limiting purposes:
- Figure 1 is the phase diagram of LiOH/KOH (Source: FactSage^{®}).
- Figure 2 shows the results of the DSC (Differential Scanning Calorimetry) assay obtained when a sample of LiOH/KOH (46.05% by weight of LiOH) is cycled 10 times.
- Figure 3 shows the results of the DSC (Differential Scanning Calorimetry) assay obtained when a sample of LiOH/KOH (78.92% by weight of LiOH) is cycled 10 times.

### PREFERRED EMBODIMENT OF THE INVENTION

In order to obtain a better understanding of the invention, below we describe the composite in question, as well as the functioning thereof in its different phases.

The carbon/salt composites are made of a porous carbon structure at least partially filled with LiOH/KOH.

The porous structure may be filled with LiOH/KOH melted by vacuum infiltration, or other industrial processes may be used, for example, filling by condensation of LiOH/KOH vapour or filling using an air stream with small solid particles of LiOH/KOH in suspension.

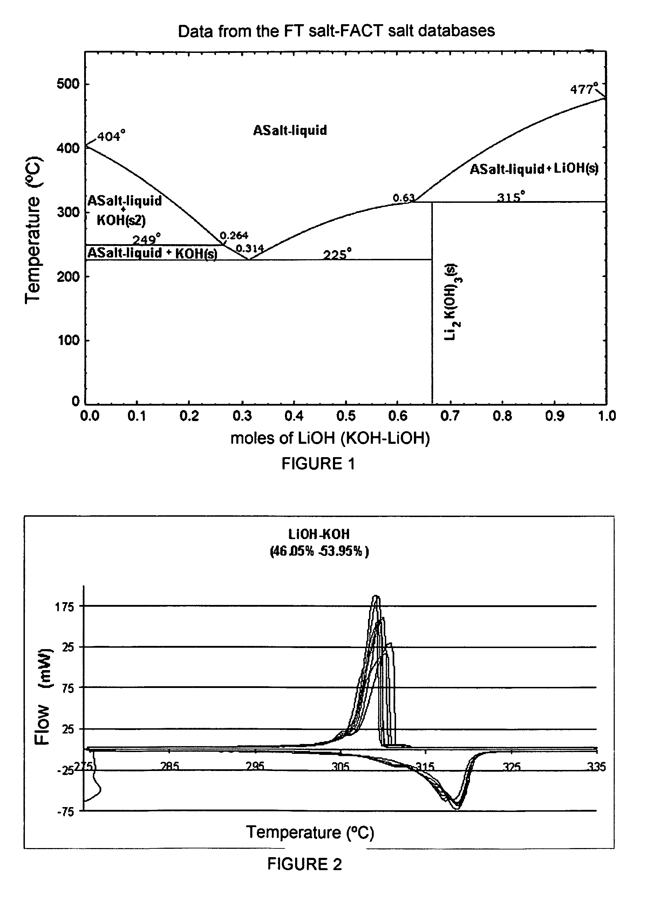

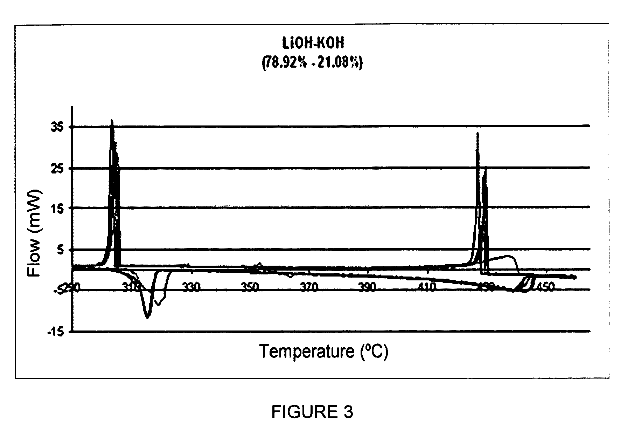

Figure 1 offers the phase diagram of the binary system LiOH/KOH, wherefrom the most significant properties of this composite are obtained; namely:
■ They make it possible to cover a broad interval of applications. As shown in Figure 1, the molar concentrations of LiOH equal to 0, 0.264, 0.314, 0.67 and 1 provide mixtures that melt at 404, 249, 225, 315 and 477°C, respectively. Therefore, they are recommended for applications that require a constant-temperature heat sink or applications that use operational fluids which undergo evaporation/condensation at a temperature close to the melting point of the mixture. On the contrary, for applications using single-phase operational fluids (i.e. overheated steam, gas), mixtures are preferred that undergo melting in a broad temperature interval. In this case, the LiOH concentration must be selected so as to meet as best as possible the process requirements in terms of the inlet/outlet temperatures of the operational fluid. For example, a 90% mixture in moles of LiOH/(LiOH+KOH) may be used to store energy in applications that require inlet/outlet temperatures of the fluid equal to 300°C-450°C.
■ The energy density involved in the full solid-liquid transformation is very high (see Table 1). For example, the latent heat for a 67% mixture in moles of LiOH/(LiOH+KOH) is 535 kJ/kg; and the enthalpy change for the full melting of a 90% mixture in moles of LiOH/(LiOH+KOH) is 1095 kJ/kg.
■ The relative volume expansion is fairly low, less than 9% for all the mixtures. The maximum values correspond to pure KOH (approximately 8.6%) and pure LiOH (+8.33%).
■ Subcooling is fairly low. Figure 2 shows results from DSC (Differential Scanning Calorimetry) assays performed on a 67% mixture in moles of LiOH/(LiOH+KOH). The positive heat flow compensation values correspond to crystallisation of the salt, whereas the negative values correspond to melting. The difference between the melting point and the crystallisation temperature is on the average less than 2°C.
■ No segregation of the chemical components of LiOH/KOH is observed when molar concentrations of LiOH are used which result in mixtures that undergo melting in a temperature interval instead of at a constant temperature. Figure 3 shows the DSC (Differential Scanning Calorimetry) results obtained when a 90% mixture of LiOH/KOH in moles of LiOH/(LiOH+KOH) is cycled. In fact, the density of LiOH (solid) is fairly close to the density of the LiOH/KOH mixture (liquid), such that gravity does not cause segregation.

**Table 1. Melting temperature interval and enthalpy change for different LiOH/KOH mixtures.**

| Composition % by weight of LiOH | Composition % in moles of LiOH | Melting interval (°C) | Enthalpy change (kJ/kg) |
|---|---|---|---|
| 0 | 0 | 403.87 | 167.03 |
| 0 | 0 | 248.85-403.87 | 497.4 |
| 0.1 | 0.2059 | 225.74 | 220.82 |
| 0.1 | 0.2059 | 225.74-291.25 | 426.9 |
| 0.1331 | 0.2638 | 225.74-248.85 | 379.8 |
| 0.1627 | 0.3120 | 225.74 | 359.26 |
| 0.3 | 0.50 | 225.74-294.58 | 576 |
| 0.4207 | 0.6289 | 225.74-314.82 | 726 |
| 0.45 | 06533 | 225.74-314.81 | 794 |
| 0.4605 | 0.6657 | 314.82 | 535 |
| 0.4605 | 0.6657 | 314.82-338.85 | 637 |
| 0.6 | 0.7778 | 314.82-401.07 | 842 |
| 0.8 | 0.9032 | 314.82-451.01 | 1108 |
| 1 | 1 | 477.01 | 875 |

## Claims

1. Composite material for storing heat energy at high temperatures, **characterised in that** it is made of a porous carbon structure that is filled at least partially with LiOH/KOH.

2. Composite material for storing heat energy at high temperatures according to claim 1, **characterised in that** the carbon structure is graphite foam.

3. Composite material for storing heat energy at high temperatures according to claim 1, **characterised in that** the carbon structure is vitreous carbon foam.

4. Composite material for storing heat energy at high temperatures according to claim 1, **characterised in that** the carbon structure is in the form of a honeycomb.

5. Composite material for storing heat energy at high temperatures according to claim 1, **characterised in that** the carbon structure is made of carbon fibres.

6. Composite material for storing heat energy at high temperatures according to claim 1, **characterised in that** the carbon structure is made of nanotubes.

7. Process of manufacturing the composite material described in the preceding claims, **characterised in that** filling of the salt in the carbon structure is performed by the condensation of LiOH/KOH vapour.

8. Process of manufacturing the composite material described in the preceding claims, **characterised in that** filling of the salt in the carbon structure is performed by means of an air stream with LiOH/KOH particles.

9. Process of manufacturing the composite material described in the preceding claims, **characterised in that** filling of the salt in the carbon structure is performed by means of vacuum infiltration techniques.
